# EUROPEAN PATENT APPLICATION

(11) **EP 1 225 707 A1**
(43) Date of publication of application: **24.07.2002**
(21) Application number: 00964727.2
(22) Date of filing: 06.10.2000
(51) Int. Cl.: H04B 1/707, H04J 13/04, H04Q 7/24, H04B 7/02

(54) **CDMA RECEIVER, AND RECEPTION METHOD**

(30) Priority: 06.10.1999 JP 28598999
(71) Applicant: NEC Corporation, Minato-ku, Tokyo 108-8001 (JP)
(72) Inventor: MIURA, Tetsuya, c/o NEC Corporation, Tokyo 108-8001 (JP)
(74) Representative: Glawe, Delfs, Moll & Partner
(86) International application number: JP0006994
(87) International publication number: WO0126243

(57) **Abstract**

There is provided a CDMA receiver and a reception method in which even in the case where a reception timing of a radio frame becomes earlier than a reception reference timing of a base station at the time of DHO, flexible follow-up to a mobile station can be carried out, and continuous reception is enabled without complicating an instrumental structure. In the CDMA receiver comprising a radio circuit portion (40) for obtaining a base band signal (11) from a high frequency signal received by an antenna (41) and a demodulation circuit portion (10A) for combining signals from a plurality of paths contained in the base band signal to obtain a demodulated signal, a searcher (13A) of the demodulation circuit portion is constructed by including a search window offset delay circuit (24) supplied with an output of a spreading code generator (25) to supply the output to a search delay circuit (23), and a search window offset control portion (26) for controlling the search window offset delay circuit, and further, a selector (32) connected to a control output from the search window offset control portion and a diversity handover start signal line (17) from the receiver control portion (19) and having an output connected to the search window offset delay circuit. By this, a timing for starting a search is formed to be capable of being changed.

## Description

### Technical Field

The present invention relates to a mobile communication receiver to which a code division multiple access (CDMA) system is applied, and a reception method, and particularly to an improvement in reception performance at the time of a diversity handover (hereinafter referred to as "DHO") operation. Incidentally, the DHO is also called soft handover.

### Background Art

As a cellular mobile communication system, a wide variety of multiple access systems have been heretofore proposed and be adopted in the world. Among others, a recent tendency has been directed to a cellular mobile code division multiple access (CDMA) system which has a specific spreading code assigned to each channel and which will be simply called a CDMA system. In such a CDMA system, a modulated wave of an identical carrier frequency which is spread by each specific spreading code is transmitted as a radio signal from a transmitter side to a receiver side. Responsive to the radio signal, a CDMA receiver in the receiver side carries out synchronization operation by use of each spreading code to identify a desired channel. In order to distinguish between channels from one another, different spreading codes are used to identify radio channels between a base station and mobile stations.

In addition, the radio signal is received through a plurality of paths, namely, a multipath in the CDMA system and, therefore, multipath fading should be removed from the radio signal in the CDMA system by accurately detecting a predetermined signal such as a synchronization signal and/or a pilot signal.

Furthermore, it is to be considered in the cellular mobile radio communication system that each mobile station is moved in radio service areas or cells from one to another with communication kept between each mobile station and base stations. In this event, the base stations must be switched from one to another without interrupting communication with the mobile station.

Taking the above into account, a CDMA receiver which is used in a mobile station comprises a RAKE receiver supplied with radio signals through the multipath and a searcher for searching such multipath signals to establish chip synchronization. In other words, the searcher is used to detect an optimum reception timing from the radio signals and to inform the RAKE receiver of the optimum reception timing. This is also applied to a CDMA receiver which is used in each base station. Accordingly, the following description will be mainly made about the CDMA receiver of the base station.

Practically, both the RAKE receiver and the searcher are given received data signals which are subjected to high frequency amplification and frequency conversion by a high frequency amplifier and a frequency converter, respectively. In this event, the RAKE receiver is operable in response to the received data signals received through the multipath and comprises a plurality of finger receivers for demodulating the received data signals by the use of a spreading code into demodulated signals. To this end, calculations are made about correlation values between the spreading code of a desired channel and each received multipath signal to capture the codes at each reception timing through each path. Thereafter, maximal-ratio combining is carried out to augment received signal strength. Such maximal-ratio combining is effective to alleviate in influence of the multipath fading and to improve a signal to noise (S/N) ratio.

On the other hand, the searcher comprises a plurality of correlators which are operable in response to the received data signals and delayed spreading codes to calculate correlation values between the received data signals and the delayed spreading codes, and a plurality of addition values for adding the respective correlation values to produce summed up correlation values. Moreover, the summed up correlation values are delivered to an effective path judgment circuit to determine effective paths and to supply the finger circuits of the RAKE receiver with the reception timing signals representative of the effective paths or the optimum reception timings. Herein, it is to be noted that the correlators of the searcher are in one-to-one correspondence to the adders.

Now, an example of a spread spectrum receiver using a CDMA system used for mobile communication of a portable telephone or the like is disclosed in Japanese Unexamined Patent Publication Tokkai No. Hei 10-190528.

The CDMA receiver disclosed in the publication comprises a radio circuit, a timing control circuit, a plurality of replica code generators, a plurality of correlators, a plurality of coherent detectors, a plurality of timing adjusting buffers, and a RAKE combiner. The radio circuit frequency converts and detects a high frequency signal received by an antenna to convert it into a base band signal. The timing control circuit searches the base band signal to detect phases of a plurality of paths, and generates a signal indicative of the phase of a replica code, a timing adjustment buffer driving timing signal (having the same period as a symbol period), and a signal indicative of a delay time of the timing adjusting buffer (in a unit of the symbol period). The plurality of replica code generators generate the replica codes at the phases indicated by this timing control circuit. The plurality of correlators multiply and integrate the base band signals by the replica codes to produce correlation values. The plurality of coherently detectors coherently detect the outputs of the correlators to produce symbol signals. The plurality of timing adjusting buffers latch the symbol signals produced by the coherent detectors to produce them with an indicated delay time. The RAKE combiner adds and combines the outputs of the plurality of timing adjusting buffers to produce demodulated signals. In this well-known receiver, a path delayed by one symbol period or more can be RAKE combined to improve the interference resistance characteristic.

Incidentally, the CDMA receiver generally carries out a DHO operation. Herein, "DHO" indicates an operation in which with the movement of the CDMA receiver (mobile station) MS, the mobile station MS changes base stations BTS under communication, and moves between cells without instantaneous interruption.

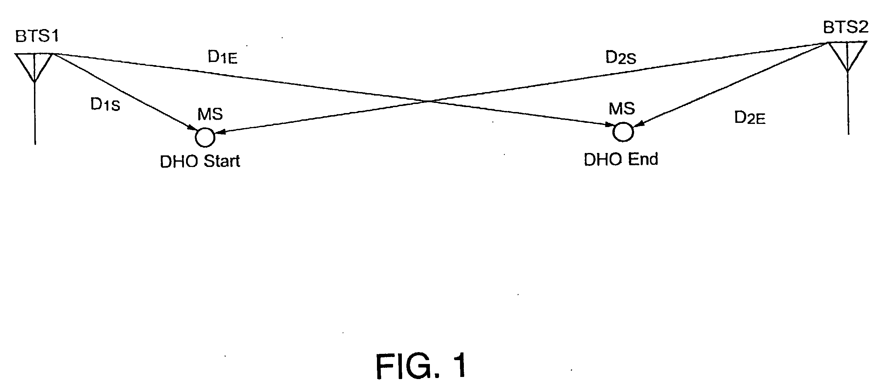

Fig. 1 schematically shows the state of this DHO. Fig. 1 shows the state in which a mobile station MS moves from a first base station BTS1 to a second base station BTS2. Herein, the first base station BTS1 is called a DHO origin base station while the second base station BTS2 is called a DHO destination base station.

In Fig. 1, reference symbols D_{1S}, D_{S2}, D_{1E}, and D_{2E} respectively designate propagation delay times as described below, and all of them have positive values. That is, D_{1S} indicates the propagation delay time of the mobile station MS at the time of the DHO start seen from the first base station BTS1, D_{S2} indicates the propagation delay time of the mobile station MS at the time of the DHO start seen from the second base station BTS2, D_{1E} indicates the propagation delay time of the mobile station MS at the time of the DHO end seen from the first base station BTS1, and D_{2E} indicates the propagation delay time of the mobile station MS at the time of the DHO end seen from the second base station BTS2.

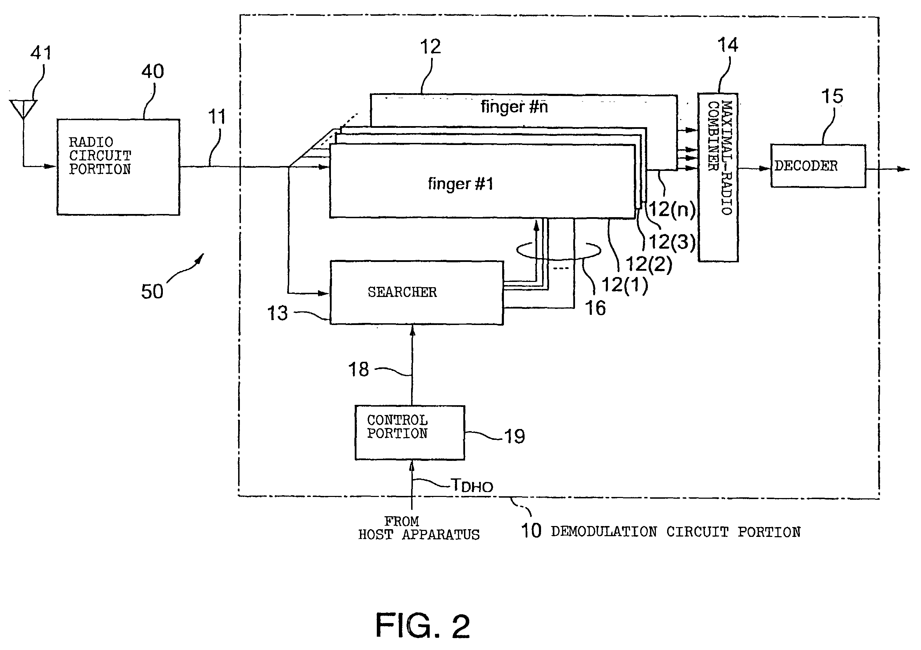

Referring now to Fig. 2, description will be made about a structure of a main portion (demodulation circuit portion) 10 in a conventional CDMA receiver 50. In the CDMA receiver 50, a base band signal (received data signal) 11 obtained by a radio circuit portion 40 from a high frequency signal received by an antenna 41 is supplied to the demodulation circuit portion 10 so as to obtain a demodulated signal by combining signals from a plurality of paths contained in the base band signal. Incidentally, although not shown, the radio circuit portion 40 includes a high frequency amplification portion for high frequency amplifying the high frequency signal received by the antenna, and a frequency conversion portion for frequency converting the high frequency amplified signal to the base band signal (received data signal).

In Fig. 2, supplied to the demodulation circuit portion 10, the received data signal 11 is supplied to a finger processing portion 12 and a searcher 13. The finger processing portion 12 consists of first to n-th finger circuits 12(1) to 12(n) corresponding to n channels from #1 to #n (n represents an integer of two or more). The searcher 13 is supplied with a frame offset signal 18 from a control unit 19. In the manner which will later be described, the searcher 13 generates a spreading code for despreading the received data signal 11 having a phase indicated by the frame offset signal 18. Incidentally, a detailed structure of the searcher 13 will be described later.

The searcher 13 calculates correlation value levels while slightly shifting the timing of despreading to the received data signal 11, searches an optimum reception timing, and indicates the reception timing to be received by the finger processing portion 12, by a reception (peak) timing signal 16, to the first to the n-th finger circuits 12(1) to 12(n) of the finger processing portion 12.

The finger processing portion 12 carries out the despreading of the received data signal 11 at the reception timing indicated by the reception (peak) timing signal 16 and carries out a detection processing. The outputs from the first to the n-th finger circuits 12(1) to 12(n) of the finger processing portion 12 are supplied to an adder (maximal-ratio combiner) 14, respectively, and are added (RAKE combining). The data after the addition is decoded by a decoder 15. Herein, the first to the n-th finger circuits 12(1) to 12(n) of the finger processing portion 12 are prepared in accordance with the number of paths to be processed by this CDMA receiver 10. For example, if n = 8, eight-path RAKE combining becomes possible at the maximum.

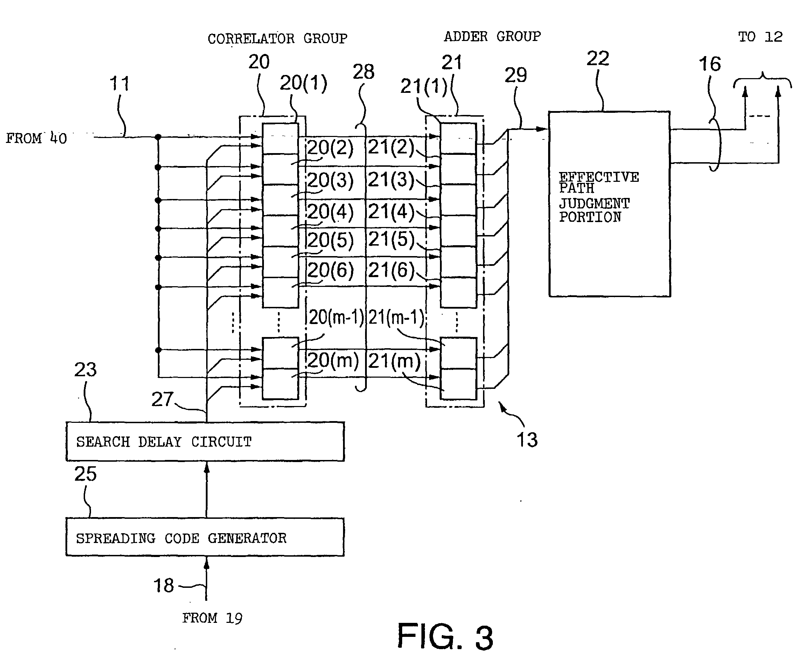

Referring now to Fig. 3, description will be made about the conventional searcher 13. The received data signal 11 is supplied to first to m-th (m represents an integer of two or more) correlators 20(1) to 20(m) of a correlator group 20. The first to the m-th correlators 20(1) to 20(m) carry out the despreading at reception timings slightly different from each other, respectively. Correlation value signals 28 as the outputs of the correlator group 20 are supplied to first to m-th adders 21(1) to 21(m) of an adder group 21, respectively. The first to the m-th adders 21(1) to 21(m) add (integrate) the correlation values by a specified number of times (which is made changeable as a parameter), and supply added correlation value signals 29 to an effective path judgment portion 22. The effective path judgment portion 22 searches a reception timing having a high level by detecting a peak from the added correlation value signals 29, and judges whether or not it should be made an effective path.

Incidentally, the effective path judgment portion 22 carries out a protection processing to the effective path determined here, and prevents the assignment of the effective path from changing frequently even if the level is changed by fading or the like, or the reception timing is slightly changed, whereby stable reception is enabled. The information of the effective path judged by the effective path judgment portion 22 is produced as peak timing signals 16 of the respective paths, which are supplied to the corresponding first to n-th finger circuits 12(1) to 12(n) of the finger processing portion 12, respectively.

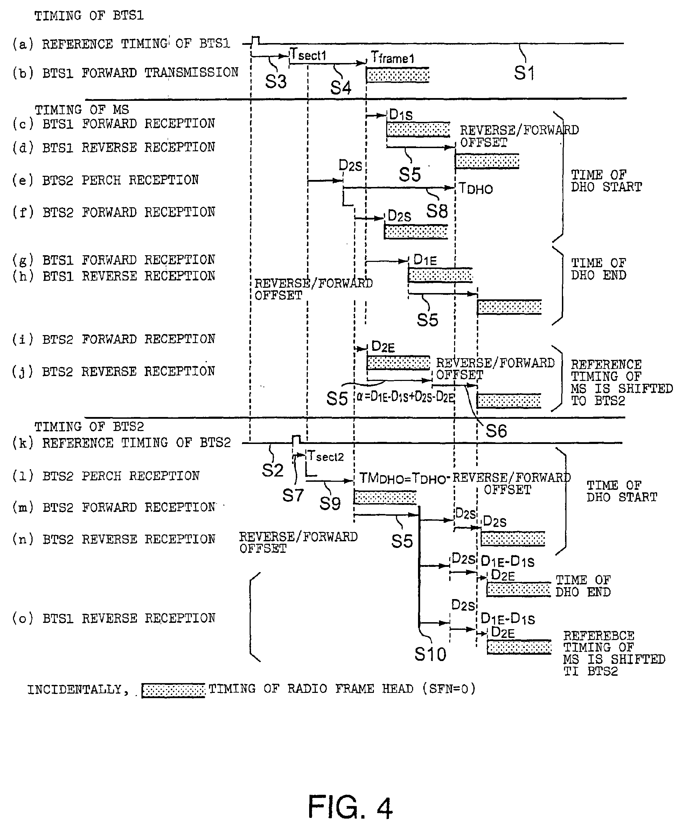

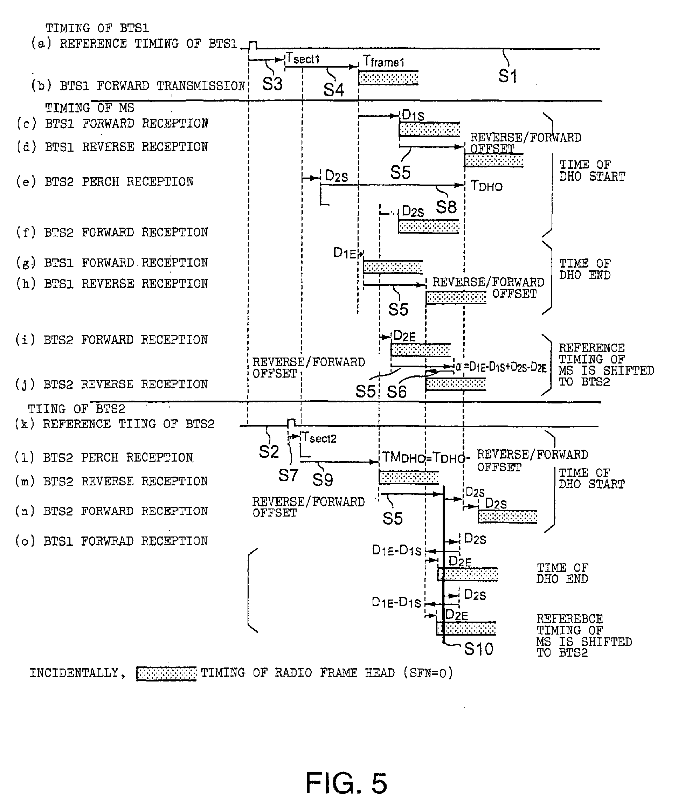

The conventional searcher 13 has a fixed search window having a constant searching range in which the searcher 13 can search. The constant searching range is determined by the number m of the correlators of the correlator group 20 and that of the adders of the adder group 21. Besides, a start time instant of the fixed search window is equal to a reception reference timing S10 of a reverse radio frame of the base station, which will later be described with reference to Fig. 4 and Fig. 5.

Referring now to Fig. 4, a DHO operation will be described while the CDMA receiver 50 having the above structure is used as an example. Fig. 4 is an explanatory view showing timings of frames of the DHO operation when the mobile station MS is moved from the first base station BTS1 to the second base station BTS2.

In Fig. 4, (a) and (b) indicate the timings of the first base station BTS1, (c) to (j) indicate the timings of the mobile station MS, and (k) to (o) indicate the timings of the second base station BTS2.

Specifically, (a) indicates the reference timing of the first base station BTS1 while (b) indicates the forward transmission timing of the first base station BTS1.

(c) to (f) indicate the timings of the mobile station MS at the time of the DHO start, (c) indicates the forward reception timing from the first base station BTS1, (d) indicates the reverse transmission timing to the first base station BTS1, (e) indicates the perch reception timing from the second base station BTS2, and (f) indicates the forward reception timing from the second base station BTS2. (g) and (h) indicate the timings of the mobile station MS at the time of the DHO end, (g) indicates the forward reception timing from the first base station BTS1, and (h) indicates the reverse transmission timing to the first base station BTS1. (i) and (j) indicate the timings of the mobile station MS in the case where the reference timing of the mobile station MS is shifted to the second base station BTS2, (i) indicates the forward reception timing from the second base station BTS2, and (j) indicates the reverse transmission timing to the second base station BTS2.

(k) indicates the reference timing of the second base station BTS2. (I) to (o) indicate the timings of the second base station BTS2 at the time of the DHO start, (I) indicates the perch transmission timing of the second base station BTS2, (m) indicates the forward transmission timing of the second base station BTS2, and (n) indicates the reverse reception timing of the second base station BTS2. (o) indicates the reverse reception timing of the second base station BTS2 at the time of the DHO end and at the time when the reference timing of the mobile station MS is shifted to the second base station BTS2.

In the case of the system as exemplified in which the base stations are asynchronous, inasmuch as the first reference timing S1 (Fig. 4(a)) in the first base station BTS1 is not in synchronization with the second reference timing S2 (in Fig. 4(k)) in the second base station BTS2, the timings are different. In Fig. 4, T_{sect1}:S3 designates a phase between a long code (long-period spreading code) of the first base station BTS1 and the perch channel of the first base station BTS1, and T_{sect2}:S7 designates a phase between a long code of the second base station BTS2 and the perch channel of the second base station BTS2. T_{framel}:S4 designates an offset for averaging the timing of the radio frame while keeping the forward orthogonality of the first base station BTS1, and the offset of the forward radio frame in the first base station BTS1 becomes (T_{sect1} + T_{frame1}) as is apparent from Fig. 4(b).

On the other hand, the mobile station MS transmits the reverse radio frame at the timing delayed from the reception timing of the forward radio frame by an reverse/forward offset S5 (Fig. 4(d)). Accordingly, inasmuch as a propagation delay time of the first base station BTS1 with respect to the mobile station MS at the time of the DHO start is equal to D_{1S}, the transmission timing of the reverse radio frame of the mobile station MS seen from the first base station BTS1 becomes a timing delayed from the reference timing S1 (Fig. 4(a)) by (T_{sect1} + T_{frame1} + reverse/forward offset + D_{1S}) of the first base station BTS1 (Fig. 4(d)). Herein, this transmission timing is simply called (T_{sect1} + T_{frame1} + reverse/forward offset + D_{1S}).

Herein, in order that the mobile station MS carries out the DHO from the first base station BTS1 to the second base station BTS2, it is necessary for the second base station MTS2 to recognize the transmission timing of the reverse radio frame from the mobile station MS (which is also the reception timing of the forward radio frame of the mobile station MS). Accordingly, the mobile station MS measures a timing difference T_{DHO} between the transmission timing (Fig. 4(d)) of the current reverse radio frame and the reception timing (Fig. 4(e)) of the perch channel of the second base station BTS2, and transmits the result as a value T_{DHO}:S8 through a control channel and a host apparatus to the second base station BTS2. The second base station BTS2 transmits the forward radio frame at a transmission timing delayed from the reference timing S2 (Fig. 4(k)) of the second base station BTS2 by (T_{sect2} + T_{DHO} - reverse/forward offset) (Fig. 4(m)) rather than the timing difference T_{DHO}. Herein, this transmission timing is simply called (T_{sect2} + T_{DHO} - reverse/forward offset). By this, at the same timing as the forward radio frame of the first base station BTS1 (Fig. 4(c)), the mobile station MS can receive the forward radio frame of the second base station BTS2 (Fig. 4(f)).

Incidentally, the second base station BTS2 transmits the perch channel at a timing (Fig. 4(I)) delayed by a phase T_{sect2}:S7 from the reference timing S2 (Fig. 4(k)), and transmits the forward radio frame at a timing further delayed from that by a time interval of TM_{DHO}:59 (Fig. 4(m)). Herein, the time interval TM_{DHO}:59 is equal to (T_{DHO} + reverse/forward offset).

On the other hand, a reception reference timing S10 of the reverse radio frame in the second base station BTS2 becomes a timing elapsed (delayed) from the reference timing S2 (Fig. 4(k)) of the second base station BTS2 by a time of (T_{sect2} + T_{DHO}), so that the second base station BTS2 can receive the reverse radio frame from the mobile station MS at the reception timing delayed from the reception reference timing S10 by a time interval of (2 × D_{2S}) (Fig. 4(n)). Hereinafter, this reception timing is simply called (2 × D_{2S}).

The reception timing of the reverse radio frame from the mobile station MS in the second base station BTS2 is gradually changed from the DHO start to the DHO end. Then, at the time of the DHO end, the reception timing of the reverse radio frame in the second base station BTS2 becomes the timing elapsed a time interval of (D_{2S} + D_{1E} - D_{1S} + D_{2E}) from the reception reference timing S10 (Fig. 4(o)). Hereinafter, this reception timing is simply called (D_{2S} + D_{1E} - D_{1S} + D_{2E}). When the DHObecomes an end, the mobile station MS changes the reception of the perch channel from the first base station BTS1 to the second base station MTS2.

At the time of sending and receiving, if the reception timings of the perch channel are different from each other, the transmission timing of the reverse radio frame is changed. However, in the case of the DHO, the operation is performed so that the timing of the reverse radio frame is not changed even if the base station (BTS) receiving the perch channel is changed. From the above, it is understood that the reception timing of the reverse radio frame of the second base station BTS2 in the DHO is changed from (2 × D_{2S}) to (D_{2S} + D_{1E} - D_{1S} + D_{2E}). Then, as shown in Fig. 4, if the reception timings always have positive values, the second base station BTS2 can receive the reverse radio frame without any problem.

Incidentally, in the case where the reference timing of the mobile station MS is shifted to the second base station MST2, the mobile station MS transmits the reverse radio frame at the timing delayed from the reception timing of the forward radio frame by a time interval of the reverse/forward offset S5 plus α (reverse/forward offset + α) (Fig. 4(j)). Herein, α = (D_{1E} - D_{1S} + D_{2S} - D_{2E}), and is a positive value in this example.

However, depending on the state during the DHO, there is a possibility that the reception timing of the reverse radio frame of the second base station BTS2 has a negative value. Fig. 5 is an explanatory view (corresponding to Fig. 4) showing the state. The same symbols as those of Fig. 4 designate the equivalent portions, and the explanation concerning the same portions explained in Fig. 4 is omitted.

However, inasmuch as the reception timing of the reverse radio frame in the second base station BTS2 at the time of the DHO end is (D_{2S} + D_{1E} - D_{1S} + D_{2E}), as shown in Fig. 5, when (D_{1S} > (D_{2S} + D_{1E} + D_{2E})) is established, the reception timing has the state of a negative value (see (o) in Fig. 5). Accordingly, the reverse radio frame reaches the second base station BTS2 at the timing earlier than the reception reference timing S10 of the reverse radio frame of the second base station BTS2, and therefore, the second base station BTS2 can not carry out desired reception. That is, in the case where the reverse radio frame becomes earlier than the reception reference timing S10, the second base station BTS2 can not receive the reverse radio frame.

Herein, the value of the α of the transmission timing to the second base station MTS2 at the mobile station MS in the case where the reference timing of the mobile station MS is shifted to the second base station MST2, is negative (see (j) in Fig. 5).

Incidentally, on the assumption that a reverse radio frame becomes earlier than the reception reference timing of the base station BTS, it is conceivable that the number of the correlators of the searcher is increased to receive this. However, this makes the structure more complicated, and it can not be said that this is a preferable measure in cost as well.

Besides, a method and apparatus for carrying out search acquisition in a CDMA communication system is disclosed in US Patent No. 5,644,591 issued to Todd R. Sutton. According to Sutton, a large window of PN chip offset hypotheses is searched, and if an energy signal indicating the existence of a pilot signal having one of chip offsets of the large search window is found, a search of a subset of offset hypotheses, that is, a small window is searched. Also in Sutton, inasmuch as a searcher having a large search window is required, the number of correlators of the searcher can not be reduced.

Accordingly, an object of the invention is to provide a CDMA receiver and a reception method in which the above problem is solved by a simple structure and even in the case where a reception timing of an reverse radio frame in a base station at the time of DHO becomes earlier than a reception reference timing of the base station, synchronization flexibly follows a mobile station, and the reverse radio frame can be received.

### Disclosure of the Invention

According to the invention, there is provided a CDMA receiver comprising a radio circuit portion for obtaining a base band signal from a high frequency signal received by an antenna and a demodulation circuit portion for combining signals from a plurality of paths contained in the base band signal to obtain a demodulated signal, the demodulation circuit portion comprises a searcher for searching an optimum reception timing by calculating correlation value levels with timings of despreading to the base band signal shifted little by little to produce reception timing signals, a finger processing portion for carrying out the despreading of the base band signal at the reception timings indicated by the reception timing signals to carry out a detection processing, and a control portion for controlling the CDMA receiver, the searcher comprises a spreading code generator for generating a spreading code at a phase corresponding to a frame offset indicated by the control portion, a search delay circuit for delaying the spreading code so as to change a timing of despreading by a predetermined time interval, a correlator group for carrying out the despreading of the base band signal by using spreading signals delayed by the search delay circuit at reception timings slightly different from each other to produce correlation value signals, an adder group for adding the correlation value signals by a specified number of times to produce added correlation value signals, and an effective path judgment portion for searching reception timings with a high level by detecting a peak from the added correlation value signals and for judging whether or not it should be made an effective path, wherein the searcher includes: a search window offset delay circuit, inserted between the spreading code generator and the search delay circuit, for delaying the spreading code generated from the spreading code generator by a selected search window offset amount to produce it to the search delay circuit; a search window offset control unit, connected to the effective path judgment portion for calculating, in response to a peak timing signal and a peak level signal supplied from the effective path judgment unit, a calculated search window offsent amount with reference to a threshold; and a selector, inserted between the search window offset control portion and the search window offset delay circuit and connected to the control portion, for selecting one of the calculated search window offset amount and an initial search window offset amount in response to a diversity handover start signal supplied from the control portion to supply the selected search window offset amount to the search window offset delay circuit.

In addition, according to the invention, there is provided a reception method of a CDMA receiver comprising a radio circuit portion for obtaining a base band signal from a high frequency signal received by an antenna and a demodulation circuit portion, including a searcher having a search window, for combining signals from a plurality of paths contained in the base band signal to obtain a demodulated signal, the searcher including a spreading code generator for generating a spreading code at a phase corresponding to a frame offset amount and a search window offset delay circuit for delaying the spreading code generated by the spreading code generator by a search window offset amount, wherein the CDMA reception method is characterized in that comprises the steps of setting a small value as the frame offset amount in the spread code generator, and controlling the search window offset delay circuit to further delay an operation start timing of a search window on receiving a reverse radio frame.

Furthermore, according to the invention, there is provided a reception method of a CDMA receiver comprising a radio circuit portion for obtaining a base band signal from a high frequency signal received by an antenna and a demodulation circuit unit, including a searcher having a search window, for combining signals from a plurality of paths contained in the base band signal to obtain a demodulated signal, the searcher including a spreading code generator for generating a spreading code at a phase indicated by a frame offset and a search window offset delay circuit for delaying the spreading code generated by the spreading code generator by a search window offset amount, wherein the CDMA reception method is characterized in that, in a case where a DHO destination base station having a reception timing of a negative value is specified during a diversity handover (DHO) operation in which a mobile station continues communication without instantaneous interruption while moving from a DHO origin base station to the DHO destination base station, comprises the steps of setting a timing difference (T_{DHO}), measured by the mobile station, between a transmission timing of a current reverse radio frame and a phase of a perch channel of the DHO destination base station in the DHO destination base station, producing and setting a DHO start signal on receiving a reverse radio frame in the CDMA receiver of the DHO destination base station, setting an initial value (WOini) as the search window offset amount in the search window offset delay circuit, and setting (T_{DHO} - WOini) as the frame offset in the spreading code generator.

### Brief Description of the Drawings

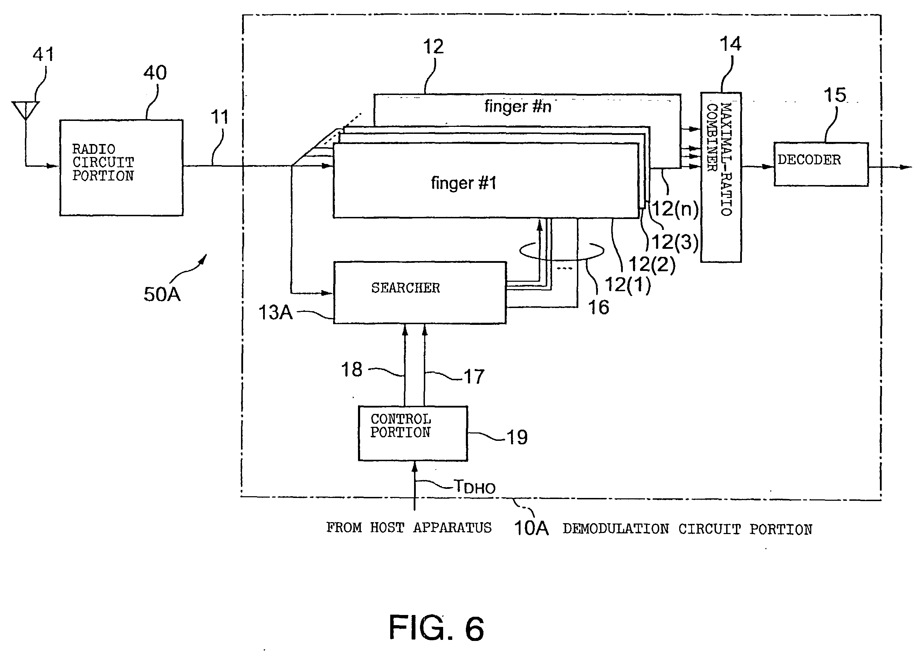

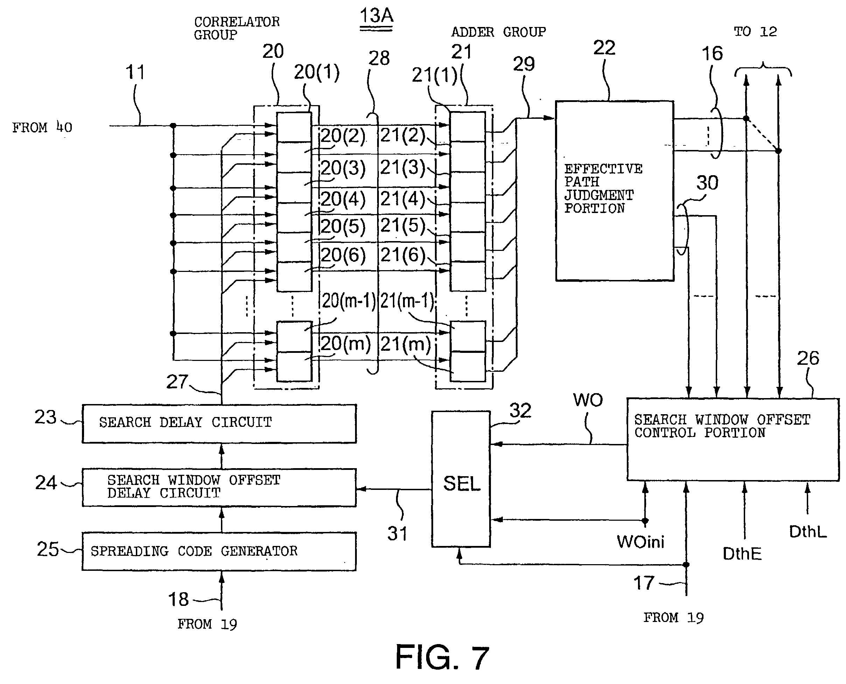

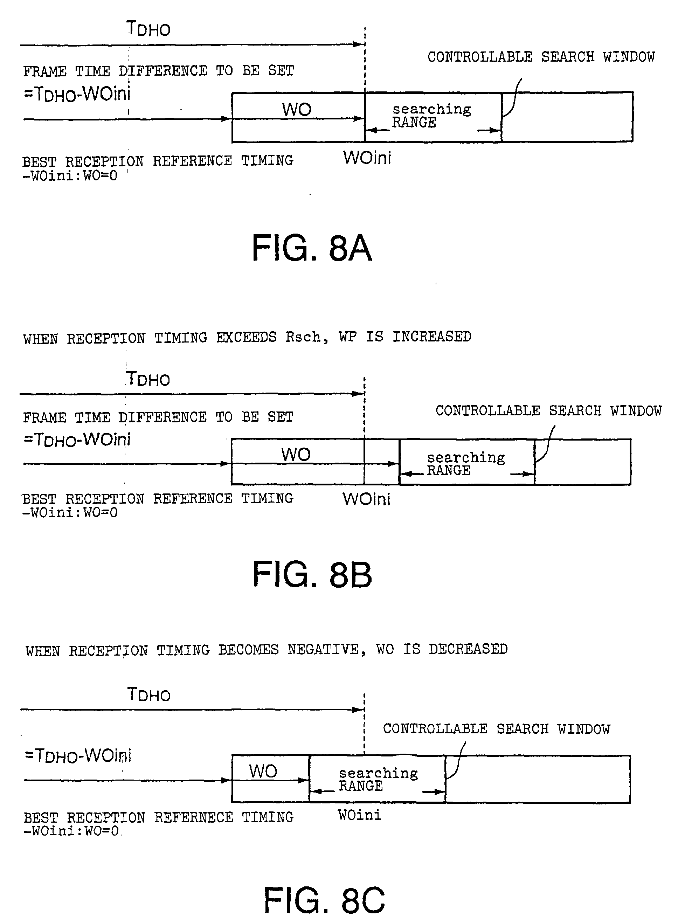

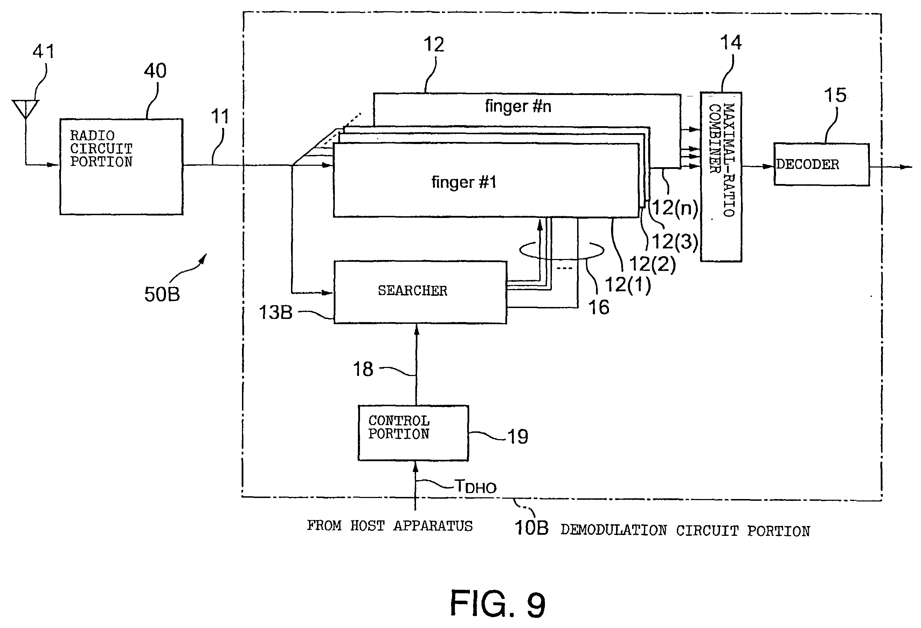

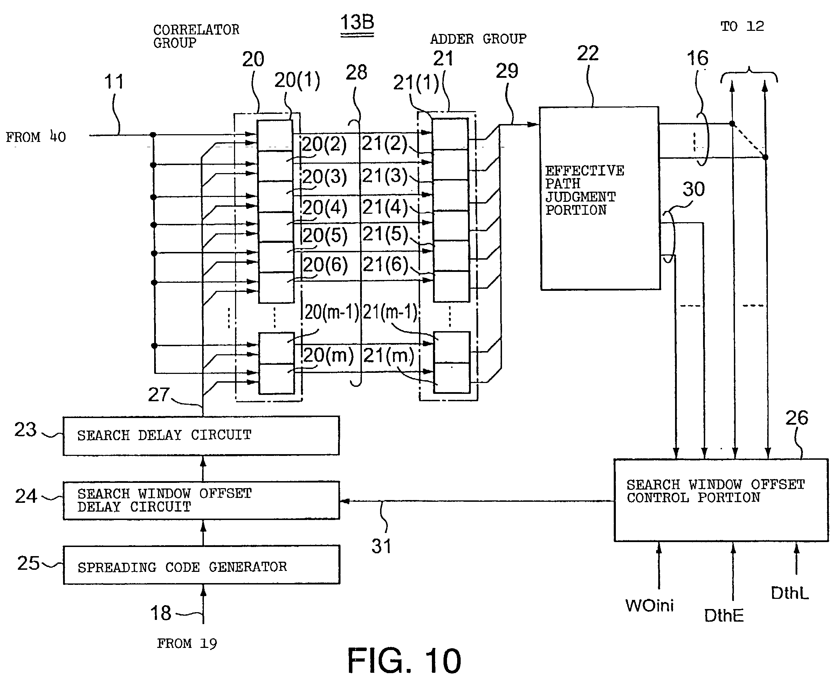

Fig. 1 is an explanatory view schematically showing a state of diversity handover in a CDMA receiver; Fig. 2 is a block diagram showing a structural example of a conventional CDMA receiver; Fig. 3 is a block diagram showing a schematic structure of a conventional searcher for use in the conventional CDMA receiver illustrated in Fig. 2; Fig. 4 is an explanatory view showing timings of frames of a DHO operation when a mobile station moves from a base station (first base station) to another base station (second base station); Fig. 5 is an explanatory view showing timings of frames of a DHO operation when a mobile station moves from a base station to another base station; Fig. 6 is a block diagram showing a structure of a CDMA receiver of a first embodiment of this invention; Fig. 7 is a block diagram showing a detailed structure of a searcher for use in the CDMA receiver illustrated in Fig. 6; Figs. 8A to 8C are views for explaining operations of the searcher illustrated in Fig. 7; Fig. 9 is a block diagram showing a structure of a CDMA receiver according to a second embodiment of this invention; and Fig. 10 is a block diagram showing a detailed structure of a searcher for use in the CDMA receiver illustrated in Fig. 9.

### Best Mode for Carrying Out the Invention

For the purpose of making a more detailed explanation of the invention, this will be described with reference to accompanying drawings.

Fig. 6 is a block diagram showing a structure of a CDMA receiver 50A according to a first embodiment of this invention and Fig. 7 is a block diagram showing a detailed structure of a searcher 13A for use in the CDMA receiver 50A. In this embodiment, although the structure of this searcher 13A is different from a conventional one, the structures of other portions are substantially similar to those of the conventional CDMA receiver 50 (Fig. 2) exemplified before.

In Fig. 6, supplied to a demodulation circuit portion 10A of the CDMA receiver 50A, a received data signal 11 is supplied to a finger processing portion 12 consisting of first through n-th finger circuits 12(1) to 12(n) and to the searcher 13A. The searcher 13A generates a spreading code of a phase indicated by a frame offset signal 18 indicated from a control portion 19 to despread the received data signal 11.

The searcher 13A calculates correlation value levels with the timing of the despreading to the received data signal 11 shifted little by little, searches an optimum reception timing, and indicates reception timings to be received in the finger processing unit 12 as reception (peak) timing signals 16 to the respective finger circuits 12(1) to 12(n) of the finger processing portion 12. When the operation is instructed by a DHO start signal 17 produced by the control portion 19, the searcher 13A sets a search window offset value to an initial value, that is, an initial search window offset value (WOini).

The finger processing portion 12 carries out despreading of the received data signal 11 at the reception timings indicated by the reception (peak) timing signals 16 to carry out a detection processing. The outputs from the respective finger circuits 12(1) to 12(n) of the finger processing portion 12 are supplied to an adder (maximal-ratio combiner) 14 and are added (RAKE combining). Added data is decoded by a decoder 15. Herein, the finger circuits 12(1) to 12(n) of the finger processing portion 12 are prepared in accordance with the number of paths to be processed by this CDMA receiver 10A. In the finger processing portion 12, for example, if n = 8, then RAKE combining of eight paths at the maximum becomes possible.

Illustrated in Fig. 7, the searcher 13A includes, in addition to those of Fig. 3 mentioned as the background art, a search window offset control portion 26, a search window offset delay circuit 24, and a selector 32 as circuit elements, and an input signal of an initial search window offset amount (WOini) and a DHO start signal 17 as signals.

In Fig. 7, the received data signal 11 is supplied to first through m-th correlators 20(1) to 20(m) of a correlator group 20. The first through the m-th correlators 20(1) to 20(m) carry out despreading at timings slightly different from each other. That is, the correlator group 20 calculates correlation values between the received data signal 11 and continuously delayed spreading codes 27 supplied from a search delay circuit 23. Correlation value signals 28 as the outputs of the correlator group 20 are supplied to first through m-th adders 21(1) to 21(m) of an adder group 21, respectively. The first through the m-th adders 21(1) to 21(m) add (integrate) the correlation values by a specified number of times (which can be changed as a parameter) to supply added correlation value signals (summed correlation values) 29 to an effective path judgment portion 22. That is, a combination of the search delay circuit 23, the correlator group 20, and the adder group 21 serves as a calculation arrangement for calculating, in a contorollable search window having a constant searing range within which the searcher 13A can search, the correlation values between the received data signal 11 and the continuously delayed spread signals 27 to produce the summed correlation values 29.

The effective path judgment portion 22 searches raeception timings having a high level by detecting a peak from the added correlation value signals 29 to judge whether or not it should be made an effective path.

The effective path judgment portion 22 carries out a protection processing for the determined effective path, and prevents the assignment of the effective path from frequently changing even if the level is changed by fading or the like or the reception timing is slightly changed, so that stable reception can be carried out.

The information of the effective path judged by the effective path judgment portion 22 is produced as peak timing signals 16 of the respective paths and peak level signals 30. The peak timing signals 16 are supplied to corresponding first to n-th finger circuits 12(1) to 12(n) of a finger processing portion 12 and the search window offset control portion 26, respectively, and the peak level signals 30 are supplied to the search window offset control portion 26. At any rate, the effective path judgment portoin 22 serves as a determination arrangement for determining the reception timing from the summed correlation value 29.

When the DHO start signal 17 is not produced by the control portion 19, in response to the supplied peak timing signals 16 and the peak level signals 30, the search window offset control portion 26 calculates a search window offset amount WO with reference to threshold values DthE, DthL to supply the calculated search window offset amount WO to the selector 32. The selector 32 supplies, as a search window offset amount 31, the calculated search window offset amount WO as it is to the search window offset delay circuit 24.

On the other hand, when the DHO start signal 17 is produced by the control portion 19 and the DHO is instructed, the selector 32 selects so that the selected search window offset amount 31 becomes the initial search window offset amount (WOini)to supply this signal (the selected search window offset amount) 31 to the search window offset delay circuit 24, so that frame synchronization of the received signal is established. When the synchronization is established, thereafter, the similar operation as the case where the DHO start signal 17 is not produced by the control portion 19 is carried out.

A spreading code generator 25 generates a spreading code for despreading in the correlator group 20 at the phase corresponding to the frame offset 18 indicated by the control portion 19 to supply it to the search window offset delay circuit 23. The search window offset delay circuit 24 delays the spreading code by the selected search window offset amount 31to supply it to the search delay circuit 23. The search delay circuit 23 delays the spreading code produced by the search window offset delay circuit 24 so that the timings of the despreading of the first through the m-th correlators 20(1) to 20(m) of the correlator group 20 are different from one another at a predetermined time interval to supply them to the first through the m-th correlators 20(1) to 20(m), respectively.

In any event, a combination of the search window offset delay circuit 24, the spread code generator 25, the search window offset control portion 26, and the selector 32 serves as a shifting arrangement for shifting a controllable search window, while the frame offset 18 is previously set to be rather small in the initial state.

In the manner as stated above, the searcher 13A shown in Fig. 7 has the controllable search window having the constant searching range in which the searcher 13A can search, as shown in Figs. 8A to 8C described later. As described before, the constant searching range is determined by the number m of the correlators in the correlator group 20 (that is, the adders in the adder group 21). Besides, as above described with reference to Figs. 4 and 5, the start time instant (operation start timing) of the controllable search window corresponds to the reception reference timing S10 of the reverse radio frame of the base station, and as described later with reference to Figs. 8A to 8C, it can shift on a time axis.

Now, the DHO operation in the CDMA receiver 50A according to the first embodiment will be described.

Also in the following description, as stated with reference to Fig. 1, it is assumed that D_{1S} indicates a propagation delay time of the mobile station MS at the time of the DHO start seen from the first base station BTS1, D_{2S} indicates a propagation delay time of the mobile station MS at the time of the DHO start seen from the second base station BTS2, D_{1E} indicates a propagation delay time of the mobile station MS at the time of the DHO end seen from the first base station BTS1, and D_{2E} indicates a propagation delay time of the mobile station MS at the time of the DHO end seen from the second base station BTS2. Timings of frames concerning the DHO operation in which the mobile station MS moves from the first base station MTS1 to the second base station BTS2 are similar to those shown in Figs. 4 and 5.

Referring now to Fig. 5, the operation of the CDMA receiver 50A according to the first embodiment will be described in the case where the relation of D_{1S} > (D_{2S} + D_{1E} + D_{2E}) is established, and the reception timing (D_{2S} + D_{1E} - D_{1S} + D_{2E}) of the reverse radio frame in the second base station BTS2 at the time of the DHO end has a negative value. Incidentally, in the conventional CDMA receiver 50, inasmuch as the reverse radio frame reaches the second base station BTS2 at the timing earlier than the reception reference timing S10 of the reverse radio frame of the second base station BTS2, the second base station BTS2 can not receive the reverse radio frame.

As already described, inasmuch as the base stations are asynchronous, the reference timings of both the stations are different from each other. In Fig. 5, T_{sect1}:S3 designates a phase between a long code (long-period spreading code) of the first base station BTS1 and a perch channel of the first base station BTS1, T_{sect2}:S7 designates a phase between a long code of the second base station BTS2 and the perch channel of the second base station BTS2, and T_{frame1}:S4 designates an offset for averaging the timings of the radio frames with forward orthogonality of the first base station BTS1 held. The offset of the forward radio frame in the first base station BTS1 is (T_{sect1} + T_{frame1}).

Also in this embodiment, most of the operation of the apparatus is substantially similar as a conventional one. That is, the mobile station MS transmits the reverse radio frame at the timing delayed from the reception timing of the forward radio frame by the reverse/forward offset:S5, and the transmission timing of the reverse radio frame of the mobile station MS seen from the first base station BTS1 at the time of the DHO start becomes (T_{sect1} + T_{frame1} + reverse/forward offset + D_{1S}).

The mobile station MS measures a timing difference between the transmission timing of the current reverse radio frame and T_{sect2} as a phase of the perch channel of the second base station BTS2 to deliver the result as a value T_{DHO8} to the second base station BTS2 through a control channel (not shown) and a host apparatus (not shown). The second base station BTS2 transmits the forward radio frame at the timing of (T_{sect2} + T_{DHO} - forward/reverse frame offset) rather than the timing difference T_{DHO} (Fig. 5(m)). Accordingly, the mobile station MS can receive at the same timing as the forward radio frame of the first base station BTS1. The reception reference timing S10 of the reverse radio frame in the second base station BTS2 is (T_{sect2} + T_{DHO}), and receives the reverse radio frame from the mobile station MS at the timing delayed from the reception reference timing S10 by (2 × D_{2S}).

The reception timing of the reverse radio frame from the mobile station MS in the second base station BTS2 is gradually changed from the DHO start to the DHO end. At the time of the DHO end, this reception timing is (D_{2S} + D_{1E} - D_{1S} + D_{2E}), and the mobile station MS changes the reception of the perch channel from the first base station BTS1 to the second base station BTS2.

Inasmuch as the reception timing of the reverse radio frame in the second base station BTS2 at the time of the DHO end is (D_{2S} + D_{1E} - D_{1S} + D_{2E}), in the case as shown in Fig. 5, the propagation delay time of the reception timing has a state of a negative value. Accordingly, the reverse radio frame reaches the second base station BTS2 at the timing when the reception timing signal is earlier than the reception reference timing S10 of the reverse radio frame of the second base station BTS2 (the reverse radio frame is earlier than the reception reference timing S10) (see (o) in Fig. 5). Incidentally, in the conventional CDMA receiver 50, the second base station BTS2 can not receive the reverse radio frame at such a time.

The CDMA receiver 50A according to this embodiment has the structure in which as shown in Fig. 7, the timing when a search is started in the searcher 13A (start time of the search window (operation start timing) can be changed. Thus, the reception can continue even in the case where the reception timing during the DHO has a negative value.

That is, in the CDMA receiver 50A according to this embodiment, when the second base station BTS2 is specified as the DHO destination base station, instead of the frame offset at the time of sending and receiving, a value measured by the mobile station MS from the host apparatus, that is, the timing difference; T_{DHO} is set. In this event, in the second base station BTS2, when the reverse radio frame is received, the DHO start signal 17 is set, and the initial search window offset amount (WOini) is set as the selected search window offset amount 31 in the search window offset delay circuit 24. At the same time, (T_{DHO} - WOini) is set as the frame offset signal 18 in the spreading code generator 25.

Referring now to the explanatory views of Figs. 8A, 8B, and 8C, the above operation will be described.

First, the state of Fig. 8A is established, the BST reception reference timing specified in the second base station BTS2 is set to (T_{DHO} - WOini), and the timing (start time instant of the search window (operation start timing)) when the search is started in the searcher 13A is delayed by the initial search window offset amount (WOini), so that the actual BST reception reference timing S10 is equal to the timing difference T_{DHO}.

By bringing the CDMA receiver (mobile station) 50A into the operation state as stated above, when the propagation delay time becomes large correspondingly to the position of the mobile station MS and is about to exceed the searching range of the search window in the searcher 13A, as shown in Fig. 8B, the search window offset amount WO (31 of Fig. 7) is increased, so that the second base station BTS2 can continue the reception of the reverse radio frame, while following the position (movement) of the mobile station MS.

Besides, on the other hand, when the propagation delay time becomes small by the movement of the mobile station MS and is about to exceed the searching range of the search window in the searcher 13A, as shown in Fig. 8C, the search window offset amount WO (31 of Fig. 7) is decreased, so that suitable reception can be carried out. That is, even in the case where the reverse radio frame to be received in the second base station BTS2 becomes earlier than the timing difference T_{DHO}, the second base station MTS2 can receive the reverse radio frame. This is because the reception reference timing S10 (start time instant of the search window (operation start timing)) in Fig. 5 can be made early.

In the manner as stated above, according to the invention, as the initial state of the CDMA receiver, setting of the frame offset to the spreading code generator is set to be rather small in advance, the operation start timing of the search window is made late by the amount, and the operation start timing of the search window is made early or late in accordance with the reception state and operation state, so that the base station side can follow the movement of the mobile station MS more flexibly. Also at the time of the DHO, even in the case where the reception timing of the radio frame becomes earlier than the reception reference timing of the base station BTS, the operation start timing of the search window in the searcher 13A is changed correspondingly, so that the base station BTS can receive the reverse radio frame while flexibly following the movement of the mobile station MS.

Referring now to Figs. 9 and 10, a CDMA receiver 50B according to a second embodiment of the invention will be described. Although a schematic structure of the CDMA receiver 50B according to this embodiment is substantially similar as that shown in the block diagram of Fig. 6, a structure of a searcher is different. Fig. 10 is a block diagram showing a structure of a searcher 13B of this embodiment. Most structural portions are common to this structure and the searcher 13A shown in Fig. 7, and as compared with the searcher 13A, they are different from each other only in that the DHO start signal line 17 and the selector 32 are removed. That is, these portions are omitted to simplify.

As compared with the conventional searcher 13 illustrated in Fig. 3, a search window offset control portion 26, a search window offset delay circuit 24, and an input signal line of an initial search window offset amount (WOini) are added to the searcher 13B. The search window offset control portion 26 directly controls the search window offset delay circuit 24 through a control line 31.

Correspondingly to the above structure, according to the second embodiment, a control signal or the like are different from the first embodiment. That is, setting of a frame offset 18 to a spreading code generator 25 is always made smaller than an appointment in advance, and correspondingly to that, the control is carried out by a control portion 19 only in the direction of delaying the operation start timing of the search window in the searcher 13B. In any event, a combination of the search window offset delay circuit 24, the spreading code generator 25, and the search window offset control portion 26 serves as a shifting arrangement for shifting the controllable search window with the frame offset 18 always set to be rather small in advance.

By doing so, even when HHO (Hard Hand Over) or DHO is repeated, it becomes unnecessary to discriminate between the originating/terminating call and the DHO, and the operation of the control portion can be further simplified.

Also in this second embodiment, even in the case where the reception timing of the reverse radio frame becomes earlier than the reception reference timing S10 of the base station BTS at the time of the DHO (Fig. 5), by changing the operation start timing (start time instant) of the search window in the searcher 13B correspondingly, the effect that the base station BTS can receive the reverse radio frame while flexibly following the movement of the mobile station MS, can be obtained, which is identical to the former embodiment.

As is understood from the foregoing description, according to the reception method of the invention, in the CDMA receiver comprising the radio circuit portion for obtaining the base band signal from the high frequency signal received by the antenna and the demodulation circuit portion which includes the searcher and which combines the signals from the plurality of paths contained in the base band signal to obtain the demodulated signal, a small value is set as a frame offset amount in the spreading code generator, and when the reverse radio frame is received, the search window offset delay circuit is controlled to more delay the operation start timing of the search window.

By this, even in the case where the reception timing of the radio frame becomes earlier than the reception reference timing of the base station at the time of the DHO, the synchronization flexibly follows the mobile station, the reverse radio frame can be received in the base station, and it is not necessary to increase the correlators of the searcher.

Similarly, according to the method of the invention shown in Fig. 6 and Fig. 7, in the CDMA receiver comprising the radio circuit portion for obtaining the base band signal from the high frequency signal received by the antenna and the demodulation circuit portion which includes the searcher and which combines the signals from the plurality of paths contained in the base band signal to obtain the demodulated signal, in the case where the DHO destination station having a reception timing of a negative value is specified during the DHO operation, the timing difference T_{DHO} measured by the mobile station from the DHO destination base station is set, and when the reverse radio frame is received, the DHO start signal is outputted and set, the initial value, that is, the initial search window offset amount (WOini) is set as the search window offset amount in the search window offset delay circuit, and (T_{DHO} - WOini) is set as the frame offset in the spreading code generator.

Also in such a structure, even in the case where the reception timing of the radio frame at the time of the DHO becomes earlier than the reception reference timing of the base station, the synchronization flexibly follows the mobile station, and the reception of the reverse radio frame in the base station can be continued.

As described above, according to the invention, in the CDMA receiver, the setting of the frame offset is set to be rather small in advance, the operation start timing of the search window is correspondingly set to be late by that amount, and the operation start timing of the search window is made early or late, and therefore, even if the reception timing of the reverse radio frame becomes earlier than the reception reference timing of the base station at the time of the DHO, the base station can receive the reverse radio frame, while flexibly following the movement etc. of the mobile station.

According to the invention, the setting of the frame offset to the spreading code generator is set to be rather small in advance, the operation start timing of the search window in the searcher is made late by that amount, and the operation start timing of the search window can be made early or late, and therefore, even in the case where the reception timing of the reverse radio frame becomes earlier than the reception reference timing of the base station at the time of the diversity handover (DHO) operation, the synchronization flexibly follows, and the effect can be obtained that the stable reception of the reverse radio frame can be carried out in the base station. Incidentally, the measure is taken without increasing the number of correlators of the searcher, and there is also a merit that the structure becomes simple and inexpensive.

## Claims

1. A CDMA receiver (50A) comprising a radio circuit portion (40) for obtaining a base band signal (11) from a high frequency signal received by an antenna (41) and a demodulation circuit portion (10A) for combining signals from a plurality of paths contained in the base band signal to obtain a demodulated signal, wherein:
said demodulation circuit portion (10A) includes a searcher (13A) for searching an optimum reception timing by calculating correlation value levels with timings of despreading to the base band signal shifted little by little to produce reception timing signals (16), a finger processing portion (12) for carrying out the despreading of the base band signal at the reception timings indicated by the reception timing signals to carry out a detection processing, and a control portion (19) for controlling said CDMA receiver;
said searcher (13A) includes a spreading code generator (25) for generating a spreading code at a phase corresponding to a frame offset (18) indicated by said control portion, a search delay circuit (23) for delaying the spreading code to change timings of despreading by a constant time interval, a correlator group (20) for carrying out the despreading of the base band at reception timings slightly different from each other by using spreading signals delayed by said search delay circuit to produce correlation value signals (28), an adder group (21) for adding the correlation value signals by a specified number of times to produce added correlation value signals (29), and an effective path judgment portion (22) for searching reception timings with a high level by detecting a peak from the added correlation value signals to judge whether or not it should be made an effective path; and
said CDMA receiver is **characterized in that**
the searcher (13A) includes:
a search window offset delay circuit (24) inserted between said spreading code generator and said search delay circuit, said search window offset delay circuit (24) delaying the spreading code generated from said spreading code generator by a selected search window offset amount (31)to produce it to said search delay circuit;
a search window offset control portion (26) connected to said effective path judgment portion, said search window offset control portion (26) calculating a calculated search window offset amount (WO) with reference to threshold values (DthE, DthL) in response to peak timing signals (16) and peak level signals (30) supplied from said effective path judgment portion; and
a selector inserted between the search window offset control portion and the search window offset delay circuit and connected to the control portion, said selector (32) selecting one of the calculated search window offset amount (WO) and an initial search window offset amount (WOini) in response to a diversity handover start signal (17) supplied from said control portion to supply the selected search window offset amount (31) to the search window offset delay circuit.

2. A reception method in a CDMA receiver (50B) comprising a radio circuit portion (40) for obtaining a base band signal from a high frequency signal received by an antenna (41) and a demodulation circuit portion (10B), including a searcher (13B) having a controllable search window, for combining signals from a plurality of paths contained in the base band signal to obtain a demodulated signal,
said searcher (13B) including a spreading code generator (25) for generating a spread code at a phase corresponding to a frame offset amount (18) and a search window offset delay circuit (24) for delaying the spreading code generated by said spreading code generator by a search window offset amount (31) for defining an operation start timing of the search window, wherein said CDMA reception method is **characterized in that** comprises the steps of:
setting a small value as the frame offset amount (18) in the spreading code generator (25); and
controlling (26) the search window offset delay circuit (24) so as to more delay the operation start timing (31) of the search window on receiving a reverse radio frame.

3. A reception method of a CDMA receiver (50A) comprising a radio circuit portion (40) for obtaining a base band signal from a high frequency signal received by an antenna (41) and a demodulation circuit portion (10A), including a searcher (13A) having a controllable search window, for combining signals from a plurality of paths contained in the base band signal to obtain a demodulated signal, said searcher (13A) including a spreading code generator (25) for generating a spreading code at a phase indicated by a frame offset (18) and a search window offset delay circuit (24) for delaying the spreading code generated by the spreading code generator by a search window offset amount (31, WO), said CDMA reception method is **characterized in that** comprises the steps of:
in a case where a DHO destination base station having a reception timing of a negative value is specified during a diversity handover (DHO) operation in which a mobile station (MS) continues communication without instantaneous interruption while moving from a DHO origin base station (BTS1) to the DHO destination base station (BTS2),
setting a timing difference (T_{DHO}), measured by said mobile station, between a transmission timing of a current reverse radio frame and a phase of a perch channel of said DHO destination base station in said DHO destination base station;
and when a reverse radio frame is received in said CDMA receiver of said DHO destination base station,
outputting and setting a DHO start signal (17);
setting an initial value (WOini) as the search window offset amount (31) in said search window offset delay circuit (24); and
setting (T_{DHO} - WOini) as the frame offset (18) in said spread code generator (25).

4. A method for searching, in a CDMA system, reception timings from a received data signal (11) received through a plurality of paths, by a searcher (13A) having a search window, to detect the reception timings (16), said search method **characterized in that** comprises the steps of:
offsetting the search window by an initial offset amount (WOini) at a time of a diversity handover start (17); and
offsetting the search window by an offset amount (WO) calculated on the basis of a result of despreading of the received data signal at a time other than the time of the diversity handover start.

5. A method for searching, in a CDMA system, reception timings from a received data signal (11) received through a plurality of paths, by a searcher (13A) capable of setting a frame offset (18) and having a search window, to detect the reception timings (16), said searching method **characterized in that** comprises the steps of:
setting setting of the frame offset (18) to be rather small (T_{DHO} - WOini) as an initial state, and making an operation start timing (31) of the search window late (WOini) by that; and
making the operation start timing (31, WO) of the search window early or late (26) in accordance with a reception state and an operation state (16, 30).

6. A method for searching, in a CDMA system, reception timings from a received data signal (11) received through a plurality of paths, by a searcher (13B) capable of setting a frame offset (18) and having a search window, to detect the reception timings (16), said searching method **characterized in that** comprises the steps of:
always setting of the frame offset (18) to be smaller than an appointment in advance; and
controlling the operation start timing (31) of the search window only in a direction of delaying.

7. A searcher (12A) for use in a CDMA receiver, for searching reception timings (16) from a received data signal (11) received through a plurality of paths, the searcher comprising:
calculation means (23, 20, 21) for calculating, in a controllable search window having a constant searching range in which said searcher can search, correlation values between the received data signal (11) and successive delayed spread codes (27)to produce summed correlation values (29);
determination means (22) for determining the reception timings from the summed correlation value; and
shifting means (24, 25, 26, 32), set a frame offset to be rather small (TDHO - WOini) in an initial state, for shifting the controllable search window.

8. A searcher according to claim 7, wherein said determination means produces peak timing signals (16) and peak level signals (30) as the reception timings, said shifting means including:
a search window offset control portion(26), supplied with threshold values (DthE, DthL) and connected to said determination means, for calculating a search window offset amount (WO) in response to the peak timing signals (16) and the peak level signals (30) with reference to the threshold values (DthE, DthL);
a selector (32) for selecting one of the calculated search window offset amount (WO) and an initial search window offset amount (WOini) in response to a diversity handover start signal (17)to produce a selected search window offset amount (31);
a spreading code generator (25) for generating a spreading code at a phase corresponding to the frame offset (18); and
a search window offset delay circuit (24) for delaying the spreading code by the selected search window offset amount to supply an offset delayed spreading code to said calculation means.

9. A searcher according to claim 8, wherein said calculation means includes:
a search delay circuit (23) for successively delaying the offset delayed spreading code to produce successive delayed spreading codes (27);
a correlator group (20) for carrying out a correlation calculation between the received data signal (11) and the successive delayed spreading code (27) to produce correlation values (28); and
an adder group (21) for successively summing the correlation values to produce the summed correlation values (29).

10. A searcher (12B) for use in a CDMA receiver, for searching reception timings (16) from a received data signal (11) received through a plurality of paths, the searcher comprising:
calculation means (23, 20, 21) for calculating, in a controllable search window having a constant searching range in which said searcher can search, correlation values between the received data signal and successive delayed spread codes to produce summed correlation values (29);
determination means (22) for determining the reception timings from the summed correlation values; and
shifting means (24, 25, 26), always set with a frame offset to be rather smaller than an appointment, for shifting the controllable search window.

11. A searcher according to claim 10, wherein the determination means produces peak timing signals (16) and peak level signals (30) as the reception timings said shifting means including:
a search window offset control unit (26), supplied with threshold values (DthE, DthL) and connected to said determination means, for calculating a search window offset amount (31) in response to the peak timing signals (16) and the peak level signals (30) with reference to the threshold values (DthE, DthL);
a spreading code generator (25) for generating a spreading code at a phase corresponding to the frame offset (18); and
a search window offset delay circuit (24) for delaying the spreading code by the selected search window offset amount to supply an offset delayed spreading code to said calculation means.

12. A searcher according to claim 11, wherein said calculation means includes:
a search delay circuit (23) for successively delaying the offset delayed spreading code to produce successive delayed spreading codes (27);
a correlator group (20) for carrying out a correlation calculation between the received data signal (11) and the successive delayed spreading codes (27) to produce correlation values (28); and
an adder group (21) for successively summing the correlation values to produce the summed correlation values (29).

13. A CDMA system for carrying out a diversity handover (DHO) operation in which, with a movement of a mobile station (MS), said mobile station moves between cells without instaneous interruption by changing a base station communicated with the mobile station from a first base station (BTS1) to a second base station (BTS2), said CDMA system **characterized in that**
said second base station includes a searcher (13A) in which a frame offset (18), can be set and which has a controllable search window,
said second base station including means (19, 32) for setting, as an initial state, the frame offset (18) to be rather small (T_{DHO} - WOini) in advance, and for making an operation start timing (31) of the search window late (WOini) by that, and
said searcher including means (26) for making the operation start timing (31) of the search window early or late in response to a reception state and an operation state (16, 30).

14. A CDMA system for carrying out a diversity handover (DHO) operation in which, with a movement of a mobile station (MS), said said mobile station moves between cells without instantaneous interruption by changing a base station communicated with the mobile station from a first base station (BTS1) to a second base station (BTS2), said CDMA system **characterized in that**
said second base station includes a searcher (13B) in which a frame offset (18) can be set and which has a controllable search window,
said second base station including means (19) for setting a frame offset (18) to be always rather smaller than an appointment, and
said searcher including means (26) for controlling an operation start timing (31) of the search window only a direction of delaying.
